# EUROPÄISCHE PATENTSCHRIFT

(11) **EP 2 172 676 B1**
(45) Veröffentlichungstag und Bekanntmachung des Hinweises auf die Patenterteilung: **03.07.2013**
(21) Anmeldenummer: 08164403.1
(22) Anmeldetag: 16.09.2008
(51) Int. Cl.: F16H 61/32, F16H 61/28

(54) **Aktuatorvorrichtung für ein Getriebe eines Kraftfahrzeuges**
Actuator device for a drive of a motor vehicle
Dispositif d'actionneur pour une transmission d'un véhicule automobile

(43) Veröffentlichungstag der Anmeldung: 07.04.2010
(73) Patentinhaber: Valeo Sicherheitssysteme GmbH, 85253 Erdweg (DE)
(72) Erfinder: Orth, Dietmar, 85253 Erdweg (DE)
(74) Vertreter: Croonenbroek, Thomas Jakob

(56) Entgegenhaltungen:
- DE-C1- 19 527 893
- DE-C1- 19 737 305
- DE-T2-602004 000 326
- FR-A- 2 772 863
- FR-A- 2 854 221
- US-A- 5 251 503

## Beschreibung

Die Erfindung bezieht sich auf eine Aktuatorvorrichtung für ein Getriebe eines Kraftfahrzeuges.

Automatisierte Getriebe (z. B. "AMT" Getriebe für "Automated Manual Transmission Control") erfreuen sich immer größerer Beliebtheit. Wohingegen in früheren Jahren rein mechanische Schaltgetriebe in Fahrzeugen benutzt wurden, sind nun mit AMT Schaltgetrieben oder DCT Schaltgetrieben (für "Double Clutch Transmission" oder Doppelkupplungen) so große Fortschritte gemacht worden, dass diese Getriebe nun dazu beitragen den Kraftstoffverbrauch eines Fahrzeugs zu reduzieren und zu optimieren.

Der Schaltvorgang eines AMT Schaltgetriebes ist vergleichbar mit dem eines manuell betätigten Getriebes. Jedoch weist das AMT Getriebe eine elektronisch gesteuerte Kupplung und Schaltgabeln auf, wobei die Kupplung und die Schaltgabeln über Aktuator- oder Stellvorrichtungen bewegt werden. Diese Aktuatorvorrichtungen werden durch ein Kontrollgerät gesteuert.

Bei automatisierten Schaltgetrieben werden in der Regel mindestens zwei Aktuatorvorrichtungen innerhalb des Getriebes benutzt, um einen Schaltvorgang in die ungeraden (Gänge 1, 3 oder 5) bew. in die geraden Gänge (Gänge 2, 4, 6) zu gewährleisten.

Nachteilig hat sich nun erwiesen, dass bei einem während eines Schaltvorganges auftretenden Störfalls, bei dem ein Aktuator nicht mehr mit Strom versorgt werden, ein undefinierter Zustand eintreten kann, der das Getriebe blockieren kann. Bei Doppelkupplungen kann ein solcher Zustand einen unlösbaren Verspannungszustand herbeiführen.

Als Stand der Technik werden dazu die Dokumente DE195 27 893 C1, DE60 2004 000 326 T2, US 5 251 503 und DE 97 37 305 genannt. Das Dokument DE 195 27 893 schlägt eine Aktuatorvorrichtung für ein Getriebe eines Kraftfahrzeuges umfassend eine Motoreinheit (3) und einer durch die Motorienheit (3) beweglichen Schaltfinger (19) vor.

Aufgabe der vorliegenden Erfindung ist es solche undefinierten Zustände zu vermeiden und zusätzliche Sicherheit im unbestromten Falle zu gewährleisten.

Diese Aufgabe wird erfindungsgemäß durch die Kennzeichen im Anspruch 1 gelöst. Insbesondere ist eine Führung vorgesehen, die in den Endpositionen Blockiermittel aufweist, welche mit komplementären Blockiermitteln, welche vom Hebel getragen werden kooperieren. In einem Ausführungsbeispiel ist die Führung H-förmig ausgeführt.

Es ist vorgesehen die Blockiermittel als Zahnkontur in der Führung zu realisieren.

Weiterhin kann der Aktuator einen Schieber aufweisen, der den Hebel entlang der Drehachse verschieben kann. Dieser Schieber ist zum Beispiel T-förmig ausgebildet.

Die Trommel kann auf einer drehbar von der Motoreinheit angetriebene Antriebswelle axial verschieblich gelagert sein, und rotatorisch mit der Antriebswelle gekoppelt sein.

Dabei ist zum Beispiel vorgesehen, dass die Kopplung zwischen der Antriebswelle und der Trommel eine komplementäre Rippen / Rillen - Kopplung ist.

Weiterhin sind zum Beispiel in axialer Richtung wirkende Federmittel vorgesehen, die entgegen des Ausfahrhubes des Aktuators wirken.

Die Federmittel umfassen in einer Variante eine Druckfeder, deren eines Ende an der Trommel und deren anderes Ende an der Antriebswelle angreift.

Der Aktuator kann zum Beispiel als ein Solenoid ausgeführt sein.

Weitere erfindungsmäßige Merkmale und Vorteile ergeben sich aus den folgenden, anhand von Figuren erläuterten Ausführungsbeispielen. Es zeigen:
- Figur 1 zeigt eine Schema in Perspektivansicht der erfindungsmäßigen Aktuatorvorrichtung,
- Figur 2 zeigt ein Ablaufdiagramm zur Funktionsweise der Aktuatorvorrichtung der Figur 1.

In allen Figuren werden die gleichen Teile mit gleichen Referenzen bezeichnet.

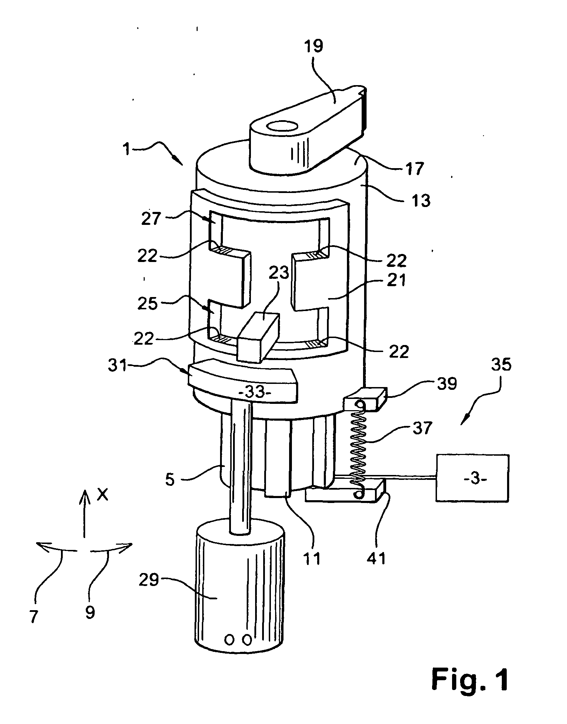

Die Figur 1 zeigt in Perspektivansicht ein Schema der erfindungsmäßigen Aktuatorvorrichtung für ein Getriebe eines Kraftfahrzeuges.

Diese Vorrichtung umfasst eine Motoreinheit 3, wie zum Beispiel einen Elektromotor mit einer Übersetzung, der an einer Antriebswelle 5 angreift. Diese Motoreinheit 3 kann außerhalb oder im Innerraum der hohlen Antriebswelle 5 gelagert sein und diese rotatorisch mit einer Drehbewegung (siehe Pfeile 7 und 9) um die Drehachse X antreiben.

Der Außenumfang der Antriebswelle 5 trägt axiale Rippen 11.

Diese Rippen 11 kooperieren mit auf der Figur nicht sichtbaren, am Innenumfang einer drehbar gelagerten Trommel 13 angebrachten Rillen, so dass die Trommel 13 einerseits Drehbewegungen ausführen kann (Pfeile 7 und 9) und andererseits axial auf der Welle 5 translatorisch verschieblich gelagert ist.

Die Trommel 13 ist becherförmig ausgeführt, wobei in das offene Ende die Antriebswelle 5 eingeführt ist, und das geschlossene Ende 17 einen Schaltfinger 19 trägt, dessen Drehachse mit der Drehachse X der Trommel 13 und der Antriebswelle 5 zusammenfällt. Der Schaltfinger 19 bewegt z. B. eine Schaltgabel in einem Getriebe für ein Kraftfahrzeug, das hier nicht näher dargestellt ist.

Die rotatorische bzw. translatorische Bewegung der Trommel wird durch ein hier H-förmige Führung 21 begrenzt, in der ein senkrecht zur Drehachse X der Trommel 13 verlaufender und mit der Trommel verbundener Hebel 23 geführt wird, so dass die Trommel 13 eine durch die Führung 21 beschränkte Axial- und / oder Rotationsbewegung ausführen kann.

Die Mittelstellung des Hebels 23 wie in Figur 1 gezeigt entspricht einer Neutralstellung in der kein Gang im nicht dargestellten Getriebe eingelegt ist.

Im gezeigten Beispiel in Figur 1 sind somit eine erste Schaltgasse zum Beispiel für die ungeraden Gänge und eine zweite Schaltgasse für die geraden Gänge definiert.

Natürlich kann auch abhängig vom dem zu schaltenden Getriebe eine andere Form der Führung mit drei oder vier Schaltgassen gewählt werden.

Wenn die Motoreinheit 3 eine Drehbewegung auf die Antriebswelle 3 in Richtung Pfeil 7 oder Pfeil 9 aufbringt, so wird ein Gang eingelegt.

Insbesondere weist die Führung 21 in Figur 1 in den Endpositionen Blockiermittel 22 auf, welche mit komplementären Blockiermitteln, welche vom Hebel 23 getragen werden, kooperieren.

Es ist vorgesehen die Blockiermittel als Zahnkontur in der Führung zu realisieren. Dabei ist die Blockierkraft der Blockiermittel jedoch nur so groß bemessen, dass im unbestromten Zustand der Hebel 23 in der Stellung gehalten wird, so dass kein undefinierter Zustand der Aktuatorvorrichtung eintreten kann.

Zum Auswählen der entsprechenden Schaltgasse 25 oder 27 ist ein Aktuator 29 vorgesehen, der als Solenoid ausgeführt ist und eine Hubbewegung ausführen kann.

Diese Hubbewegung wird an einen, in dieser Variante T-förmig ausgeführten Schieber 31 weitergegeben, wobei dieser Schieber mit seinem senkrecht zur axialen Richtung X ausgeführten Endstück 33 an den Hebel 23 angreifen kann, um diesen axial zu Verschieben. Der Aktuator kann somit den Hebel 23 und somit die Trommel 13 und den Schaltfinger 19 entlang der Drehachse translatorisch verschieben. Damit ist der Aktuator dazu bestimmt, durch eine Axialbewegung des Hebels 23 eine Schaltgasse auszuwählen. Jedoch ist dies nur möglich, wenn der Hebel 23 in seiner neutralen Mittelstellung steht.

Des Weiteren sind in axialer Richtung X wirkende Federmittel 35 vorgesehen, die entgegen des Ausfahrhubes des Aktuators 29 wirken.

Die Federmittel umfassen in der gezeigten Variante eine Druckfeder 37, deren eines Ende an einem Stift 39 an der Trommel 13 und deren anderes Ende an einem Stift 41 der Antriebswelle 5 befestigt sind.

Die Funktionsweise der hier beschriebenen Aktuatorvorrichtung ist wie folgt.

In Figur 1 ist die Aktuatorvorrichtung in der Neutralposition in Schaltgasse 25 gezeigt. Die Aktuatorvorrichtung wird von einem nicht gezeigten Kontrollgerät gesteuert, dass Steuersignale sowohl an die Motoreinheit 3 zur Ausführung einer Drehbewegung und als auch an den Aktuator 29 zur Ausführung einer Hubbewegung abgibt und koordiniert.

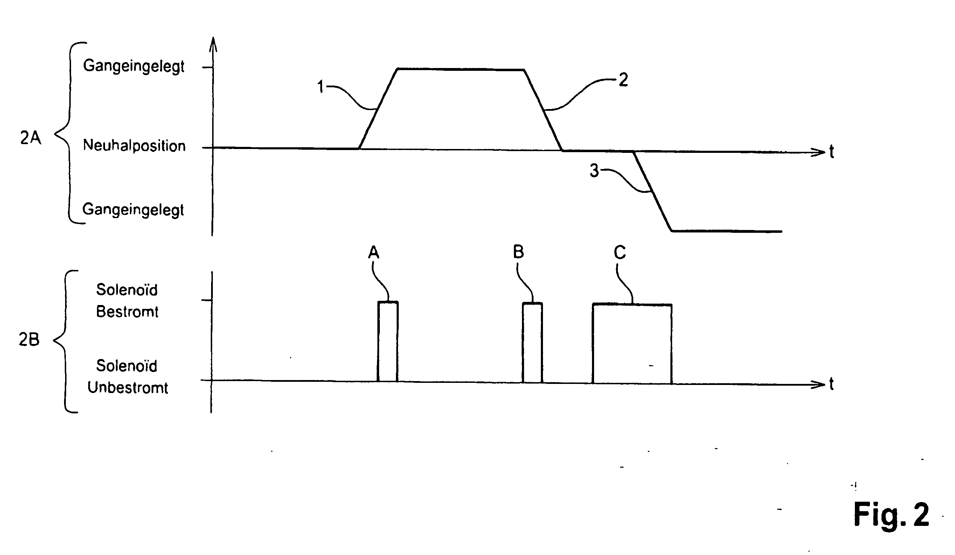

Die Figur 2 zeigt ein Beispiel einer solchen Steuerung. Im Teildiagramm 2A wird ein Beispiel der Drehbewegung in Abhängigkeit von der Zeit t für die Motoreinheit 3 gezeigt, was zu einer Drehbewegung der Trommel 13 und somit des Schaltfingers 19 führt.

Im Teildiagramm wird das an den als Solenoiden ausgeführten Aktuator 29 angelegte Steuersignal in Abhängigkeit von der Zeit gezeigt.

Soll nun ein Gang im nicht gezeigten Getriebe eingelegt werden, so wird zunächst ein Steuersignal an die Motoreinheit 3 angelegt so dass eine Drehbewegung in Richtung einer Endposition in der Schaltgasse 25 eingeleitet wird. Sobald der Hebel 23 sich in dem Kanal der Gasse befindet, wird der Solenoid kurz bestromt, so dass der Hebel an der Kante der Führung anschlägt, der den Blockiermitteln 22 gegenüber liegt. Sobald der Hebel im Endanschlag ist und somit ein Gang eingelegt ist, wird der Solenoid nicht mehr bestromt. Dadurch geraten über die Wirkung der Federmittel 35 die Blockiermittel 22 sowie die komplementären Blockiermittel des Hebels in Eingriff. Somit ist eine sichere Führung und Haltung der Stellung im unbestromten Falle der Aktuatorvorrichtung gegeben, wobei dies auch im Störfalle gewährleistet wird.

Bei Auslegen des Gangs wird in umgekehrter Reihenfolge der Solenoid kurz bestromt, damit die Blockiermittel 22 außer Eingriff kommen und die Drehbewegung ohne Widerstand von der Motoreinheit eingeleitet werden kann bis die mittlere Neutralstellung erreicht ist.

Soll nun ein Gang in der Schaltgasse 27 eingelegt werden, so wird der Solenoid bestromt, so dass der Schieber eine Axialbewegung in Richtung der Schaltgasse 27 ausführt. Ist Hebel 23 im Anschlag in der Schaltgasse 27, so wird die Drehbewegung eingeleitet bis ein Gang eingelegt ist. Erst dann wird der Solenoid nicht mehr bestromt, was dazu führt dass die Blockiermittel 22 mit den komplementären Blockiermitteln des Hebels 23 in Engriff treten.

Die hier aufgezeigte Lösung einer Aktuatorvorrichtung zeichnet sich dadurch aus, dass sie es erlaubt kleinere Motoren in der Motoreinheit 3 zu benutzen, was zu einem geringen Gewicht und zu einer Reduzierung der Kosten für eine Aktuatorvorrichtung führt.

Außerdem ist die hier gezeigte Aktuatorvorrichtung auch im unbestromten Zustand in einer definierten Stellung.

## Patentansprüche

1. Aktuatorvorrichtung für ein Getriebe eines Kraftfahrzeuges umfassend eine Motoreinheit (3) und einen durch die Motoreinheit (3) beweglichen Schaltfinger (19), wobei sie eine drehbar gelagerte Trommel (13) aufweist, welche rotatorisch mit dem Schaltfinger (19) gekoppelt ist, und die Trommel (13) einen senkrecht zur Drehachse (X) der Trommel verlaufenden Hebel (23) umfasst, welcher in einer Führung (21) geführt ist, so dass die Trommel (13) eine durch die Führung beschränkte Axial- und / oder Rotationsbewegung ausführen kann, und einen Aktuator (29), der am Hebel (23) angreifen kann, um die Trommel (13) translatorisch entlang der Drehachse (X) zu verschieben, **dadurch gekennzeichnet, dass** die Führung (21) in den Endpositionen Blockiermittel (22) aufweist, welche mit komplementären Blockiermitteln, welche vom Hebel (23) getragen werden kooperieren.

2. Aktuatorvorrichtung nach Anspruch 1, **dadurch gekennzeichnet, dass** die Führung (21) H-förmig ausgeführt ist.

3. Aktuatorvorrichtung nach Anspruch 1 oder 2, **dadurch gekennzeichnet, dass** die Blockiermittel (22) als Zahnkontur in der Führung (21) realisiert sind.

4. Aktuatorvorrichtung nach einem Ansprüche 1 bis 3, **dadurch gekennzeichnet, dass** der Aktuator (29) einen Schieber (31) aufweist, der den Hebel (23) entlang der Drehachse (X) verschieben kann.

5. Aktuatorvorrichtung nach Anspruch 4, **dadurch gekennzeichnet, dass** der Schieber (31) T-förmig ausgebildet ist.

6. Aktuatorvorrichtung nach einem Ansprüche 1 bis 5, **dadurch gekennzeichnet, dass** die Trommel (13) auf einer drehbar von der Motoreinheit (3) angetriebene Antriebswelle (5) axial verschieblich gelagert ist, und rotatorisch mit der Antriebswelle (5) gekoppelt ist.

7. Aktuatorvorrichtung nach Anspruch 6, **dadurch gekennzeichnet, dass** die Kopplung zwischen der Antriebswelle (5) und der Trommel (13) über eine komplementäre Rippen / Rillen - Kopplung (11) bewerkstelligt ist.

8. Aktuatorvorrichtung nach einem der Ansprüche 6 oder 7, **dadurch gekennzeichnet, dass** sie in axialer Richtung wirkende Federmittel (35) aufweist, die entgegen des Ausfahrhubes des Aktuators (29) wirken.

9. Aktuatorvorrichtung nach Anspruch 8, **dadurch gekennzeichnet, dass** das die Federmittel (35) eine Druckfeder (37) umfassen, deren eines Ende an der Trommel (13) und deren anderes Ende an der Antriebswelle (5) angreift.

10. Aktuatorvorrichtung nach einem der Ansprüche 1 bis 9, **dadurch gekennzeichnet, dass** der Aktuator (29) einen Solenoiden umfasst.

## Claims

1. Actuator apparatus for a transmission of a motor vehicle comprising a motor unit (3) and a selector finger (19) which can be moved by the motor unit (3), the said actuator apparatus having a rotatably mounted drum (13) which is coupled rotationally to the selector finger (19), and the drum (13) comprising a lever (23) which extends perpendicularly with respect to the rotational axis (X) of the drum and is guided in a guide (21), with the result that the drum (13) can perform an axial and/or rotational movement which is restricted by the guide, and further comprising an actuator (29) which can act on the lever (23), in order to displace the drum (13) translatorily along the rotational axis (X), **characterized in that** the guide (21) has blocking means (22) in the end positions, which blocking means (22) cooperate with complementary blocking means which are carried by the lever (23).

2. Actuator apparatus according to Claim 1, **characterized in that** the guide (21) is of H-shaped configuration.

3. Actuator apparatus according to Claim 1 or 2, **characterized in that** the blocking means (22) are realized as a tooth contour in the guide (21).

4. Actuator apparatus according to one of Claims 1 to 3, **characterized in that** the actuator (29) has a slide (31) which can displace the lever (23) along the rotational axis (X).

5. Actuator apparatus according to Claim 4, **characterized in that** the slide (31) is of T-shaped configuration.

6. Actuator apparatus according to one of Claims 1 to 5, **characterized in that** the drum (13) is mounted axially displaceably on a drive shaft (5) which is driven rotatably by the motor unit (3), and is coupled rotationally to the drive shaft (5).

7. Actuator apparatus according to Claim 6, **characterized in that** the coupling between the drive shaft (5) and the drum (13) is brought about via a complementary rib/groove coupling (11).

8. Actuator apparatus according to either of Claims 6 and 7, **characterized in that** it has spring means (35) which act in the axial direction and act counter to the extension stroke of the actuator (29).

9. Actuator apparatus according to Claim 8, **characterized in that** the spring means (35) comprise a compression spring (37), one end of which acts on the drum (13) and the other end of which acts on the drive shaft (5).

10. Actuator apparatus according to one of Claims 1 to 9, **characterized in that** the actuator (29) comprises a solenoid.

## Revendications

1. Dispositif d'actionneur pour une transmission d'un véhicule automobile, comprenant une unité de moteur (3) et un doigt de changement de vitesses (19) déplaçable par l'unité de moteur (3), le dispositif d'actionneur présentant un tambour (13) monté à rotation, qui est accouplé de manière rotative au doigt de changement de vitesses (19), le tambour (13) comprenant un levier (23) s'étendant perpendiculairement à l'axe de rotation (X) du tambour, le levier étant guidé dans un guide (21), de sorte que le tambour (13) puisse effectuer un mouvement axial et/ou de rotation limité par le guide, et comprenant un actionneur (29) qui peut venir en prise avec le levier (23) afin de déplacer le tambour (13) en translation le long de l'axe de rotation (X), **caractérisé en ce que** le guide (21) présente des moyens de blocage (22) dans les positions d'extrémité, lesquels moyens coopèrent avec des moyens de blocage complémentaires qui sont portés par le levier (23).

2. Dispositif d'actionneur selon la revendication 1, **caractérisé en ce que** le guide (21) est réalisé en forme de H.

3. Dispositif d'actionneur selon la revendication 1 ou 2, **caractérisé en ce que** les moyens de blocage (22) sont réalisés sous forme de profils dentés dans le guide (21).

4. Dispositif d'actionneur selon l'une quelconque des revendications 1 à 3, **caractérisé en ce que** l'actionneur (29) présente un coulisseau (31) qui peut déplacer le levier (23) le long de l'axe de rotation (X).

5. Dispositif d'actionneur selon la revendication 4, **caractérisé en ce que** le coulisseau (31) est réalisé en forme de T.

6. Dispositif d'actionneur selon l'une quelconque des revendications 1 à 5, **caractérisé en ce que** le tambour (13) est monté de manière déplaçable axialement sur un arbre d'entraînement (5) entraîné en rotation par l'unité de moteur (3), et est accouple de manière rotative à l'arbre d'entraînement (5).

7. Dispositif d'actionneur selon la revendication 6, **caractérisé en ce que** l'accouplement entre l'arbre d'entraînement (5) et le tambour (13) est réalisé par le biais d'un accouplement complémentaire entre gorges.

8. Dispositif d'actionneur selon l'une quelconque des revendications 6 ou 7, **caractérisé en ce qu'**il présente des moyens de ressort (35) agissant dans la direction axiale, lesquels agissent à l'encontre de la course de sortie de l'actionneur (29).

9. Dispositif d'actionneur selon la revendication 8, **caractérisé en ce que** les moyens de ressort (35) comprennent un ressort de compression (37) dont une extrémité vient en prise avec le tambour (13) et l'autre extrémité vient en prise sur l'arbre d'entraînement (5).

10. Dispositif d'actionneur selon l'une quelconque des revendications 1 à 9, **caractérisé en ce que** l'actionneur (29) comprend un solénoïde.
